# EUROPEAN PATENT APPLICATION

(11) **EP 1 262 385 A2**
(43) Date of publication of application: **04.12.2002**
(21) Application number: 02253318.6
(22) Date of filing: 13.05.2002
(51) Int. Cl.: B60R 25/04

(54) **Start system**

(30) Priority: 31.05.2001 GB 0113125
(71) Applicant: ArvinMeritor Light Vehicle Systems (UK) Ltd, Birmingham, West Midlands, B30 3BW (GB)
(72) Inventor: Willats, Robin, Lea, Preston PR2 1XW (GB); Emson, John, West Bromwich, West Midlands B71 3SF (GB); Fisher, Sidney, Callow Hill, Redditch B97 5YS (GB); Didier, Jean, 88650 Anould (FR); Dixon, Alan, Dodleston, Chester CH4 9NU (GB); Drysdale, Stephen, Northampton NN5 4BG (GB); Spurr, Nigel, Shirley, Solihull B90 2PS (GB); Kalsi, Gurbinder, Oldbury, West Midlands B68 0NF (GB)
(74) Representative: Jones, John Bryn

(57) **Abstract**

A start system (10) for a vehicle (12), the system comprising scanning mcans (18) arranged so as to scan an area around a driver's seat of the vehicle to detect an authorisation device (22) having a particular level of authorisation so as to ensure that only a person carrying an authorisation device having this level of authorisation and positioned in the area around the driver's seat (26) may start the vehicle.

## Description

The present invention relates to a start system. More particularly, the present invention relates to a start system for a vehicle.

Passive entry and start systems for vehicles are known. Once a vehicle is fitted with a passive entry system, it is also desirable that a passive start system is also used so that a vehicle user need only carry a single authorisation device in order to both enter and start the vehicle. In such systems users generally carry a smartcard type authorisation device that in effect unlocks their vehicle once the user is in range of a smartcard scanner of the vehicle and the card identity is accepted. The user then unlatches the vehicle and enters. The smartcard also effectively energises the vehicle's start system. The user then presses a button, for example, to start the vehicle.

However, one problem with such systems arises if the system operates with two levels of authorisation in which non-driving vehicle users' authorisation devices have only a first level of authorisation in order to access the vehicle, whereas drivers carry authorisation devices having both the first and second levels of authorisation in order to both enter the vehicle and start the vehicle. In such situations, it is undesirable for a user having the second level of authorisation and sitting in a passenger seat of the vehicle to activate the start system, because this means that a person having only the first level of authorisation, or no authorisation at all, can sit in the driver's seat and be able to start the vehicle.

A further problem that may be encountered is the possibility that once the start system has been energised, a user could start the vehicle whilst not being properly seated in the driver's seat.

The present invention seeks to overcome, or at least mitigate, the problems of the prior art.

One apsect of the present invention provides a start system for a vehicle, the system comprising scanning means arranged so as to scan an area around a driver's seat of the vehicle to detect an authorisation device having a particular level of authorisation so as to ensure that only a person carrying an authorisation device having this level of authorisation and positioned in the area around the driver's seat may start the vehicle.

A second aspect of the present invention provides a start system for a vehicle comprising first and second input means wherein both input means must be actuated to enable the vehicle to start and wherein the input means are sufficiently mutually spaced to prevent actuation thereof by a single hand of a vehicle user.

A third aspect of the present invention provides a vehicle start method comprising the steps of: a scanning means detecting an authorisation device associated with a user only when a user is sitting in the driver's seat of the vehicle; and the scanning means authenticating the authorisation device for a particular level of authorisation to permit vehicle starting.

Embodiments of the present invention are now described, by way of example only, with reference to the accompanying drawings in which:
FIGURE 1 is a schematic diagram of a vehicle entry and start system incorporating a start system according to one embodiment of the present invention; and
FIGURE 2 is a flow chart illustrating the operation of the entry and start system.

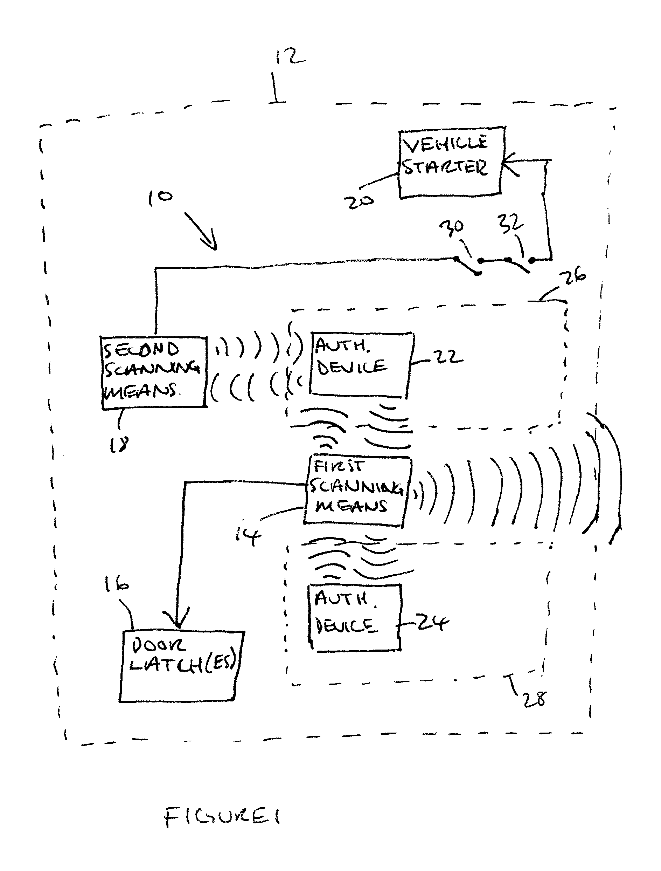

Referring to Figure 1, there is illustrated schematically an entry and start system 10 for a vehicle 12. The vehicle is fitted with first scanning means 14 and second scanning means 18 operably connected respectively to vehicle door latch 16 and vehicle starter 20 by an electrical circuit. Although the first and second scanning means are shown separately, both could in practice be mounted within the same housing, for example. Input means, preferably in the form of switches 30 and 32 is provided in the circuit connecting the second scanning means 18 to vehicle starter 20. In this embodiment, the vehicle is fitted with a driver's seat 26 and a passenger seat 28.

The first scanning means 14 periodically scans for the existence of corresponding authorisation devices 22, 24 preferably using electromagnetic radiation such as radio frequency waves, microwaves, or infra-red waves, for example, and is relatively powerful, thus enabling the detection of such authorisation devices some distance away from the vehicle. Once a compatible authorisation device is detected, the first scanning means 14 interrogates the authorisation device 22, 24, which is normally in the form of a transponder or smartcard, to obtain an identity code associated with that particular device.

The scanning means then compares this code with codes held in a first memory associated therewith to determine whether that particular device 22, 24 has the first level of authorisation required to permit access to the vehicle 12. If this is the case, the first scanning means 14 signals the unlocking of door latches 16. Although a direct path is shown between first scanning means 14 and door latches 16 in Figure 1, in some embodiments, the first scanning means may signal an overall controller (not shown) for the vehicle, which then in turn signals the unlocking of door latches 16. An authorised vehicle user may then unlatch a door latch and enter the vehicle.

Second scanning means 18, which again preferably operates using electromagnetic waves such as radio frequency waves or microwaves, has a relatively low scanning power and/or is directional, being targeted specifically at driver's seat 26. In particularly preferred classes of embodiment, the second scanning means is positioned under the driver's seat with the scanning directed upwardly, or is positioned above the driver's seat and directed downwardly. Both of the aforesaid arrangements mean that the scanning power of the second scanning means 18 is less crucial to the successful operation of the second scanning means within the immediate area of the driver's seat.

As such, if a vehicle user carrying authorisation device 22 is seated on driver's seat 26, the authorisation device 22 will come into range of the second scanning means 18 and will be interrogated by the second scanning means. Second scanning means 18 operates in a similar manner to first scanning means 14 and looks up the identity code of the authorisation device in a second memory (not shown) to determine whether authorisation device 22 has the second level of authorisation required to start the vehicle. If this is the case, the second scanning means 18 energises/signals the vehicle starter 20. However, unless switches 30 and 32 are closed/actuated, the signal will not reach the starter 32.

Therefore, in order to start the vehicle, a user seated in driver's seat 26 and having authorisation device 22 with the second level of authorisation must close both switches 30 and 32.

In a preferred embodiment, the switches are mounted on a steering wheel of the vehicle and are sufficiently far apart to prevent their simultaneous closing by a single hand. Typically, a spacing of 250 mm is likely to be sufficient. Therefore, in order to start the vehicle, both switches must at the same time be actuated/in a closed state, meaning that both the user's hands must be in the region of the steering wheel. In a particularly preferred embodiment the switches 30, 32 are located such that when the steering wheel is grasped they fall easily to hand. Indeed, in some embodiments, no further action other than gripping the steering wheel is required to actuate the switches. The switches may be monostable (i.e. stable in only one position, such as in the off position) or bistable (i.e. stable in two positions, such as in both on and off positions), and in a preferred embodiment are touch sensors. A third switch/input (not shown) is preferably provided to enable the engine to be stopped once it is running.

However, if a vehicle user having the second authorisation level is not seated on the driver's seat 26, the authorisation device 24 will be out of the range of second scanning means 18. Therefore it is not possible for a non-driving user to start the vehicle even if they are seated in the driver's seat and carrying the authorisation device having the first level of authorisation, whilst a user having a second level of authorisation is seated outside the range of the second scanning means 18.

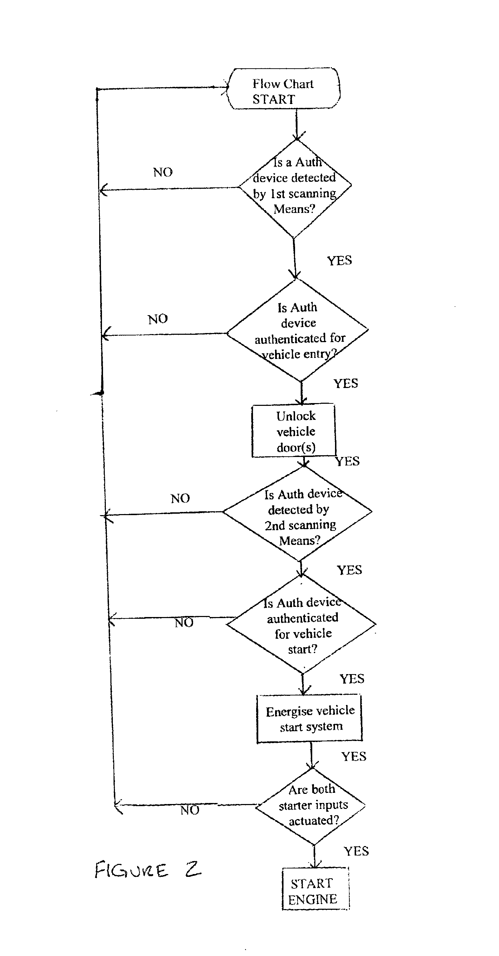

The sequence of operation of the entry and start system is summarised by the flow chart of Figure 2. The system preferably also operates in reverse, so that when the authorisation device moves out of range of the second and first scanning means, the vehicle is respectively stopped and locked, although manual overrides may be provided to prevent this occurring, as necessary.

It should be understood that numerous changes may be made within the scope of the present invention. For example, the start system may also be used to store user preferences such as seat and steering wheel position, for example, with the driver's seat only being adjusted when an appropriate authorisation device is detected in the immediate vicinity of the driver's seat. Individual directional sensors may be provided for one or more passenger seats so that personal preferences may be set for each passenger seat by the entry and start system. Alternative input means such as touch sensors may be provided. The scanning means may alternatively scan biometric data such as fingerprints or retinal data for use as an identity code for a particular user and may operate using alternatives to electromagnetic radiation such as sonar. In other embodiments, more than two levels of authorisation may be used so as to control a user's use of other vehicle features. Signals from the first and second scanning means may pass via a controller to the door latch(es) and vehicle starter. Switches 30 and 32 need not necessarily be provided in series with each other or the second scanning means and may instead be individually connected to the controller. Furthermore, the system may have applications in building entry control, for example.

## Claims

1. A start system (10) for a vehicle (12), the system comprising scanning means (18) arranged so as to scan an area around a driver's seat of the vehicle to detect an authorisation device (22) having a particular level of authorisation so as to ensure that only a person carrying an authorisation device having this level of authorisation and positioned in the area around the driver's seat (26) may start the vehicle.

2. A system according to Claim 1 further comprising input means located proximate the driver's seat wherein only once the input means is closed does the vehicle start.

3. A system according to Claim 2 wherein the input means (30, 32) comprises a pair of switches both of which must be actuated for the vehicle to start.

4. A system according to Claim 3 wherein the switches are sufficiently mutually remote so as not to be capable of engagement by a single hand.

5. A system according to Claim 4 wherein the input means is located on a steering wheel provided in the vehicle.

6. A start and entry system incorporating a start system according to any preceding Claim.

7. A start and entry system according to Claim 6 wherein the system comprises first scanning means (14) to scan an area around the vehicle for the existence of one or more authorisation devices (22, 24) having a first level of authorisation so as to enable entry to the vehicle and wherein the scanning means arranged to scan an area around the driver's seat is a second scanning means (18), the particular level of authorisation being a second level.

8. A system according to any preceding Claim wherein the or each authorisation device has an identity code.

9. A system according to Claim 8 wherein the first and/or second scanning means obtain the identity code and compare the code with identity codes stored in a corresponding first and second memory to determine whether a particular authorisation device has either the first or second level of authorisation.

10. A system according to any preceding Claim further having means arranged to stop the vehicle and/or selectively lock one or more vehicle doors.

11. A system according to Claim 10 wherein the locking means locks the vehicle door(s) once the authorisation device moves out of range of the first scanning means.

12. A system according to Claim 10 or Claim 11 wherein the stop means stops the vehicle once the authorisation device moves out of range of the second scanning means.

13. A start system for a vehicle (12) comprising first (30) and second (32) switches, wherein both switches must be actuated in any order to enable the vehicle to start and wherein the switches are sufficiently mutually spaced to prevent actuation thereof by a single hand of a vehicle user.

14. A system according to Claim 13 wherein the switches are mounted on a steering wheel of the vehicle.

15. A system according to Claim 14 wherein the switches are actuated, in use, by the vehicle user grasping the steering wheel.

16. A system according to any of Claims 13 to 15 wherein the switches comprise touch sensors.

17. A system according to any of claims 13 to 16 wherein at least one of the switches is monostable.

18. A vehicle start method comprising the steps of:
(i) providing a scanning means (18) which detects an authorisation device (22) associated with a user only when a user is sitting in the driver's seat (26) of the vehicle; and
(ii) ensuring the scanning means authenticates the authorisation device for a particular level of authorisation to permit vehicle starting.

19. A method according to Claim 18 further comprising the step of the user closing an input means to start the vehicle.
